(19) Europäisches Patentamt / European Patent Office / Office européen des brevets

(11) **EP 4 593 259 A1**

(12) **DEMANDE DE BREVET EUROPEEN**

(43) Date de publication:
**30.07.2025 Bulletin 2025/31**

(21) Numéro de dépôt: **24223033.2**

(22) Date de dépôt: **23.12.2024**

(51) Classification Internationale des Brevets (IPC):
**H02K 1/30** *(2006.01)* **H02K 9/06** *(2006.01)*
**H02K 49/04** *(2006.01)*

(52) Classification Coopérative des Brevets (CPC):
**H02K 1/30; H02K 9/06;** H02K 49/043

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**
Etats d'extension désignés:
**BA**
Etats de validation désignés:
**GE KH MA MD TN**

(30) Priorité: **27.12.2023 FR 2315347**

(71) Demandeur: **Telma**
**95310 Saint-Ouen L'Aumône (FR)**

(72) Inventeurs:
- **AKAFOU, Mbarek**
  **78130 LES MUREAUX (FR)**
- **LOUNIS, Rafik**
  **95800 CERGY (FR)**
- **BELANCE, Romuald**
  **95170 DEUIL LA BARRE (FR)**
- **QUENNET, Nicolas**
  **95240 CORMEILLES EN PARISIS (FR)**

(74) Mandataire: **Plasseraud IP**
**104 Rue de Richelieu**
**CS92104**
**75080 Paris Cedex 02 (FR)**

(54) **ROTOR DE MACHINE ÉLECTRIQUE TOURNANTE ET ENSEMBLE RALENTISSEUR ÉLECTROMAGNÉTIQUE ET GÉNÉRATRICE**

(57) L'invention concerne un rotor (2) de machine électrique tournante, le rotor étant propre à tourner autour d'un axe de rotation (X-X), un plan transversal étant perpendiculaire à l'axe de rotation ; le rotor comportant :
- une bague intérieure de fixation (4),
- un corps cylindrique (6) ayant une face périphérique, le corps cylindrique et la bague intérieure de fixation étant coaxiaux ;
- des bras de fixation (8) présentant une forme de lamelle ayant deux faces principales ; les bras de fixation (8) comprenant une portion distale (21) raccordée au corps cylindrique, la portion distale étant inclinée de sorte que les faces principales de l'extrémité distale des bras de fixation forment un angle d'inclinaison compris entre 40 degrés et 60 degrés avec le plan radial.

L'invention concerne également un ensemble ralentisseur électromagnétique et génératrice.

FIG. 1

EP 4 593 259 A1

## Description

## Domaine technique de l'invention

L'invention concerne un rotor de machine tournante et en particulier un rotor de ralentisseur électromagnétique pour véhicule. L'invention concerne également un ensemble ralentisseur électromagnétique et génératrice.

## Etat de la technique antérieure

Le rotor des ensembles ralentisseurs électromagnétiques et génératrices comporte généralement une bague intérieure destinée à être montée sur un arbre rotatif, un flasque latéral et un corps cylindrique coaxial à la bague intérieure. Le flasque est constitué par une plaque en forme d'anneau qui relie la bague intérieure au corps cylindrique. Le corps cylindrique constitue l'induit du ralentisseur.

Un tel rotor est décrit dans la demande de brevet FR 18 55 848 déposée au nom de la demanderesse. Ce rotor donne entière satisfaction. Il serait néanmoins souhaitable de proposer un rotor plus robuste.

## Présentation de l'invention

Un premier but de la présente invention est de proposer un rotor plus robuste. Un deuxième but est de renforcer la ventilation des bobinages du ralentisseur et de la génératrice.

## Résumé de l'invention

La présente invention a pour objet un rotor de machine électrique tournante, le rotor étant propre à tourner autour d'un axe de rotation dans un sens de rotation par rapport au stator, l'axe de rotation s'étendant selon une direction axiale ; le rotor comportant :

- une bague intérieure de fixation destinée à être fixée à un arbre rotatif,
- un corps cylindrique ayant une surface périphérique, le corps cylindrique et la bague intérieure de fixation étant coaxiaux,
- des bras de fixation raccordées à la bague intérieure de fixation et au corps cylindrique en une zone de raccordement ; pour chaque bras de fixation, un plan tangentiel, une droite et un plan transversal étant définis ; le plan tangentiel étant tangentiel à la surface périphérique en la zone de raccordement du bras de fixation ; le plan transversal étant perpendiculaire à l'axe de rotation et passant par la zone de raccordement du bras de fixation ; la droite étant contenue dans le plan tangentiel et le plan transversal ;

  les bras de fixation présentant une forme de lamelle ayant une première face principale située d'un côté amont du rotor en considérant le sens de rotation, une deuxième face principale opposée à la première face principale, une première face latérale destinée à être en regard d'un stator, une deuxième face latérale opposée à la première face latérale, une première arête agencée entre la deuxième face principale et la deuxième face latérale ; les bras de fixation comprenant une portion distale raccordée au corps cylindrique ; chaque bras de fixation étant incliné de sorte que la première arête de l'extrémité distale du bras de fixation forme un angle d'inclinaison compris entre 40 degrés et 60 degrés, et de préférence 45 degrés, avec la droite.

Avantageusement, les bras de fixation permettent d'augmenter le refroidissement du corps cylindrique par ventilation tout en assurant une tenue mécanique permettant d'éviter une déformation importante du corps cylindrique.

Les caractéristiques exposées dans les paragraphes suivants peuvent, optionnellement, être mises en oeuvre. Elles peuvent être mises en oeuvre indépendamment les unes des autres ou en combinaison les unes avec les autres :

- De préférence, les bras de fixation comportent, lorsque vu dans le plan transversal un premier tronçon courbe, un deuxième tronçon courbe et un troisième tronçon rectiligne ; le premier tronçon, le deuxième tronçon courbe et le troisième tronçon étant situé entre la bague intérieure de fixation et le corps cylindrique, et dans lequel la portion distale inclinée comprend au moins le troisième tronçon.
- De préférence, le premier tronçon est raccordé à la bague intérieure de fixation, et dans lequel le premier tronçon présente un premier rayon de courbure, le deuxième tronçon présente un deuxième rayon de courbure, et le rapport entre le premier rayon de courbure et le deuxième rayon de courbure est compris entre 1,5 et 2, 5.
- De préférence, la portion distale des bras de fixation est inclinée par rapport à un axe d'inclinaison s'étendant selon une direction longitudinale de la portion distale du bras de fixation, l'axe d'inclinaison étant situé au centre de la deuxième face latérale.
- De préférence, le troisième tronçon s'étend sur une longueur comprise entre 30 millimètres et 60 millimètres avant son raccordement au corps cylindrique.
- De préférence, l'extrémité distale des bras de fixation, lorsque vue dans le plan transversal, est décalée angulairement vers l'arrière d'un angle $\alpha$ compris entre 50 degrés et 60 degrés par rapport à l'extrémité proximale, en considérant le sens de rotation du rotor par rapport à un stator.
- De préférence, le rotor comporte en outre des ailettes de refroidissement fixées à la surface périphérique du corps cylindrique et une couronne coaxiale au corps cylindrique, la couronne coiffant uniquement les ailettes de refroidissement agencées sur une partie centrale de la surface périphérique, les ailettes de refroidissement agencées sur un premier bord et sur un deuxième bord de la surface périphérique étant ouvertes sur l'extérieur.

- De préférence, la surface périphérique est délimitée selon la direction axiale par une extrémité, la couronne comprenant un bord latéral adjacent à l'extrémité de la surface périphérique, et dans lequel le bord latéral de la couronne est éloignée de l'extrémité de la surface périphérique d'une distance comprise entre 15 millimètres et 30 millimètres, ladite distance étant mesurée selon la direction axiale.

- De préférence, l'extrémité distale des bras de fixation est raccordée à une face latérale de raccordement du corps cylindrique, à la surface périphérique du corps cylindrique et à une face latérale de la couronne ; l'extrémité distale des bras de fixation s'étendant en saillie perpendiculairement à la surface périphérique du corps cylindrique de manière former une ailette de refroidissement propre à diriger l'air vers la surface périphérique du corps cylindrique.

Avantageusement, l'extrémité distale du bras de fixation forme une ailette qui dirige l'air vers les canaux de refroidissement du corps cylindrique.

L'invention a également pour objet un ensemble ralentisseur électromagnétique et génératrice, ledit ensemble comportant un stator et un rotor ; le stator comprenant une face externe et une face interne ; la face externe portant un inducteur de ralentisseur agencé en regard d'une surface intérieure du corps cylindrique ; la face interne portant un induit de génératrice ; le rotor étant conformé selon les caractéristiques mentionnées ci-dessus, le corps cylindrique formant un induit de ralentisseur, la bague intérieure de fixation comprenant un inducteur de génératrice disposé en regard de la face interne du stator.

**Brève description des figures**

[Fig. 1] est une vue de côté d'un rotor selon l'invention ;
[Fig. 2] est une vue en perspective d'une partie du rotor illustré sur la figure 1 ;
[Fig. 3] est une vue de côté d'une partie du rotor illustré sur la figure 1;
[Fig. 4] est une vue de dessus d'une partie du rotor illustré sur la figure 1;
[Fig. 5] est une vue schématique en coupe radiale d'une partie d'un ensemble ralentisseur électromagnétique et génératrice comprenant un rotor illustré sur la figure 1.

**Description détaillée de l'invention**

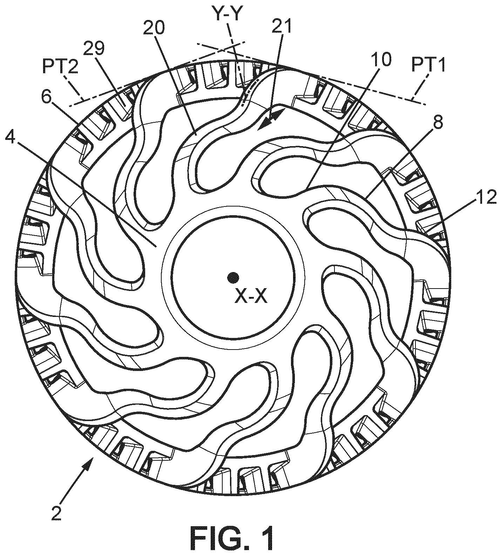

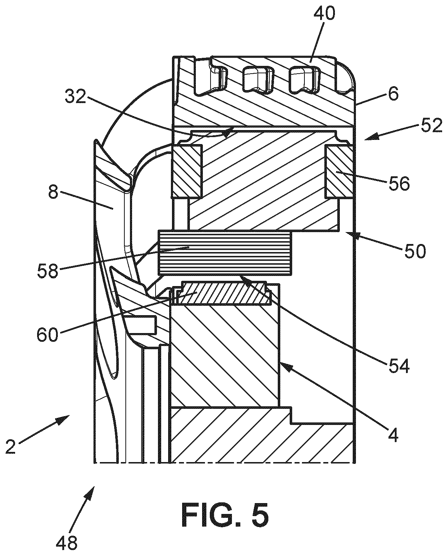

En référence à la figure 1, l'invention concerne un rotor 2 de machine électrique tournante. Par exemple, le rotor 2 est un rotor de ralentisseur électromagnétique pour véhicule. En particulier, ce rotor peut être monté dans un ensemble ralentisseur électromagnétique et génératrice tel qu'illustré sur la figure 5.

Le rotor 2 est propre à tourner autour d'un axe de rotation X-X s'étendant selon une direction axiale A. Pour les besoins de la présente description on définit un plan transversal PR perpendiculaire à l'axe de rotation X-X,

Le rotor 2 comporte une bague intérieure de fixation 4 destinée à être fixée à un arbre rotatif non représenté, un corps cylindrique 6 et des bras de fixation 8 raccordés à la bague intérieure de fixation et au corps cylindrique.

La bague intérieure de fixation 4 et le corps cylindrique 6 sont coaxiaux.

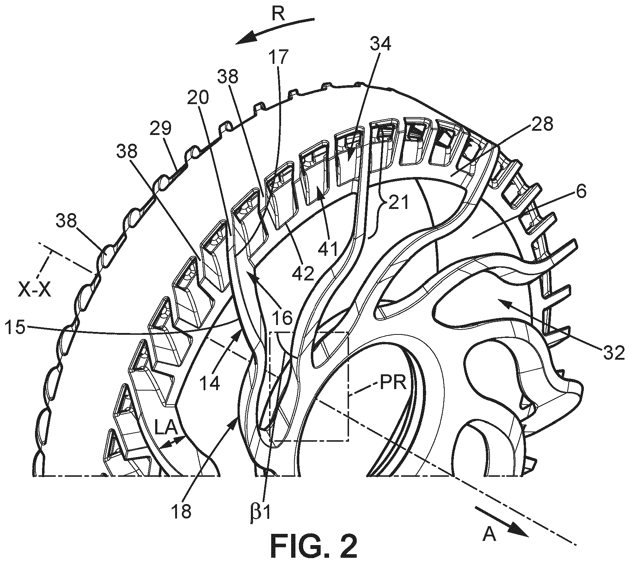

En référence à la figure 2, le corps cylindrique 6 présente la forme d'un manchon. Le corps cylindrique 6 comprend une face latérale 28 de raccordement, une face latérale 29 libre opposée à la face de raccordement, une surface périphérique 30 et une surface intérieure 32.

La face latérale 28 de raccordement est la face sur laquelle les bras de fixation 8 sont raccordés. Les bras de fixation 8 sont raccordés à la face latérale 28 de raccordement du corps cylindrique 6 en des zones de raccordement 27. Le plan transversal PR passe par les zones de raccordement 27 du corps cylindrique 6.

Pour chaque bras de fixation 8, on définit un plan tangentiel PT1, PT2 à la surface périphérique 30 en un point de la zone de raccordement 27, comme visible sur la figure 1. Pour chaque bras de fixation 8, on définit une droite contenant un plan tangentiel et le plan transversale PR. Ainsi, pour un bras de fixation 8, une droite D1 est contenue dans le plan tangentiel PT1 et le plan transversale PR. Pour un autre bras de fixation 8, une droite D2 est contenue dans le plan tangentiel PT2 et le plan transversale PR.

La surface périphérique 30 comprend un premier bord 34 adjacent à la face latérale de raccordement et un deuxième bord 36 opposé au premier bord. Le premier bord 34 de la surface périphérique 30 est délimité selon une direction axiale par une extrémité 42. La surface périphérique 30 est une surface radialement externe.

Dans l'exemple illustré à titre d'exemple et nullement limitatif, le rotor comporte dix bras de fixation. Les bras de fixation sont régulièrement répartis autour de la bague intérieure.

Chaque bras de fixation comprend une extrémité proximale 10 raccordée à la bague intérieure de fixation et une extrémité distale 12 raccordée au corps cylindrique. L'extrémité distale 12 des bras de fixation, lorsque vue dans le plan transversal PR, est décalée angulairement vers l'amont (vers l'arrière) par rapport à l'extrémité proximale 10, en considérant le sens de rotation R du rotor par rapport à un stator. Ce décalage α est compris entre 50 degrés et 60 degrés.

Les bras de fixation 8 présentent une forme de lamelle ou de bande. Elles possèdent une première face principale 16, une deuxième face principale 14 parallèle et opposée à la première face principale, une première face latérale 18 destinée à être en regard d'un stator et une deuxième face latérale 20 opposée à la première face latérale. La première face principale 16 est située du côté amont (de l'arrière) du rotor en considérant le sens de rotation R du rotor par rapport à un stator. Dit autrement, un vecteur normal à la première face principale 16 est dirigé dans un sens opposé au sens de rotation R. La deuxième face principale 14 est située du côté aval (de l'avant) du rotor en considérant le sens de rotation R du rotor par rapport à un stator. Dit autrement, un vecteur normal à la deuxième face principale 16 est dirigé dans le sens de rotation R. Une première arête 15 est agencée entre la deuxième face principale 14 et la deuxième face latérale 20. Une deuxième arête 17 est agencée entre la première face principale 16 et la deuxième face latérale 20.

La première arête 15 de l'extrémité proximale 10 des bras de fixation présentent un angle β1 compris entre 25 degrés et 35 degrés par rapport au plan transversal PR. De préférence, l'angle β1 est égal à 30 degrés.

Pour chaque bras de fixation, la première arête 15 de l'extrémité distale 12 du bras de fixation forme un angle d'inclinaison β2 compris entre 40 degrés et 60 degrés avec la droite D1, la droite D1 étant contenue dans le plan transversal PR et le plan tangentiel PT1 en la zone de raccordement 27 de ce bras de fixation 8.

De préférence, l'angle d'inclinaison β2 est égal à 45 degrés.

Les bras de fixation 8 comportent une portion distale 21 raccordée au corps cylindrique 6. La portion distale 21 est inclinée par rapport à un axe d'inclinaison Y-Y. L'axe d'inclinaison Y-Y s'étend selon une direction longitudinale de la portion distale des bras de fixation. De préférence, l'axe d'inclinaison Y-Y est situé au centre de la deuxième face latérale 20, comme illustré sur la figure 1.

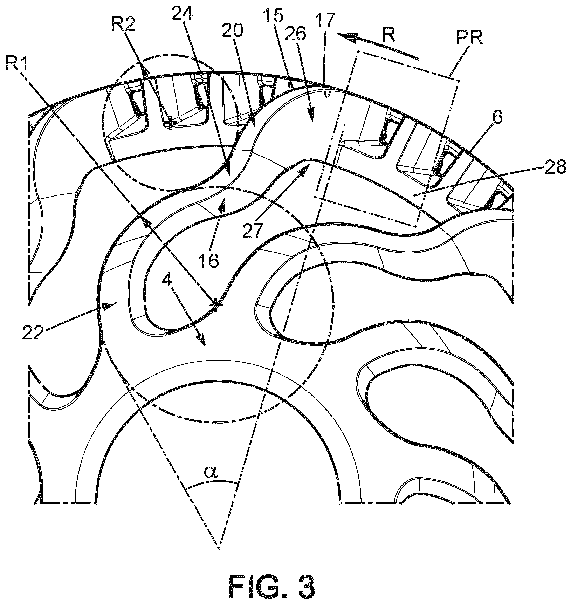

En référence à la figure 3, les bras de fixation 8 comportent, lorsque vu dans le plan transversal PR un premier tronçon 22 courbe, un deuxième tronçon 24 courbe et un troisième tronçon 26 rectiligne.

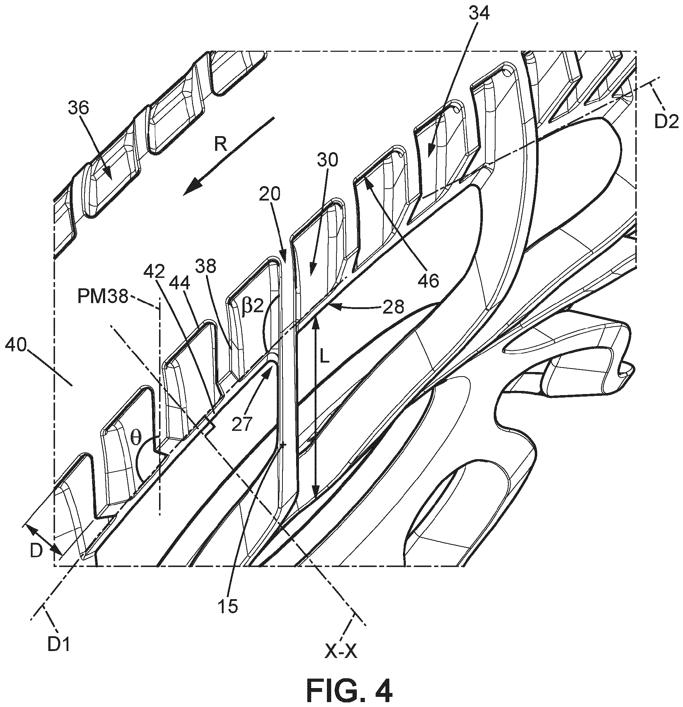

Le premier tronçon 22 est raccordé à la bague intérieure de fixation 4. Le premier tronçon, le deuxième tronçon et le troisième tronçon 26 sont situés entre la bague intérieure de fixation 4 et le corps cylindrique 6. En particulier, le troisième tronçon rectiligne s'étend sur une longueur L comprise entre 30 millimètres et 60 millimètres avant son raccordement à une face latérale 28 de raccordement du corps cylindrique, comme visible sur la figure 4. Le troisième tronçon 26 se prolonge ensuite de façon rectiligne sur une surface périphérique 30 du corps cylindrique. Selon le premier mode de réalisation illustré sur les figures, la portion distale inclinée 21 des bras de fixation correspond au troisième tronçon. Autrement dit, les bras de fixation commencent à s'incliner à partir de la jonction entre le deuxième tronçon courbe et le troisième tronçon rectiligne. Les bras de fixation s'inclinent progressivement de plus en plus tout le long du troisième tronçon.

Selon un deuxième mode de réalisation, la portion distale inclinée 21 des bras de fixation correspond au deuxième tronçon et au troisième tronçon. Dans ce mode de réalisation, l'inclinaison des bras de fixation commence à partir du point d'inflexion entre le premier tronçon et le deuxième tronçon. Les bras de fixation s'inclinent progressivement de plus en plus sur le deuxième tronçon et sur le troisième tronçon.

Le premier tronçon 22 est courbé dans un sens inverse au sens de rotation R du rotor par rapport au stator. Autrement dit, un vecteur normal à sa surface concave est dirigé dans un sens opposé au sens de rotation R du rotor.

Le deuxième tronçon 24 est courbé dans un sens opposé au premier tronçon 22. Le premier tronçon 22 et le deuxième tronçon 24 forment un S. Le bras comporte un point d'inflexion entre le premier tronçon 22 et le deuxième tronçon 24.

Le premier tronçon 22 présente un premier rayon de courbure R1. Le deuxième tronçon 24 présente un deuxième rayon de courbure R2. Le premier et le deuxième rayon de courbure sont illustrés et mesurés le long de la même face principale 16. De préférence, le rapport entre le premier rayon de courbure R1 et le deuxième rayon de courbure R2 est compris entre 1,5 et 2, 5.

$$1,5 < \frac{R1}{R2} < 2,5$$

Cette forme permet de réduire la déformation plastique des bras de fixation tout en assurant une ventilation du corps cylindrique et des bobines du stator. La forme en lamelle des bras de fixation ainsi que leur inclinaison et leur direction permet de ventiler le corps cylindrique et les bobines du stator. Cette forme des bras de fixation permet également de réduire les pertes aérodynamiques et en conséquence augmente la rentabilité électrique de la machine électrique tournante pourvu d'un tel rotor.

Le corps cylindrique 6 comprend des ailettes de refroidissement 38 fixées à la surface périphérique 30 du corps cylindrique. Les ailettes de refroidissement 34 présentent la forme d'une lamelle bombée.

Les ailettes de refroidissement 38 sont disposées parallèlement les unes aux autres le long d'au moins deux rangées.

Les ailettes de refroidissement 38 d'une première rangée sont alignées le long du premier bord 34.

Un vecteur normal à la face concave des ailettes de refroidissement 38 de la première rangée est dirigé dans le sens de rotation R du rotor par rapport au stator. Ainsi, les ailettes de refroidissement sont propres à diriger une plus grande quantité d'air vers la surface périphérique 30 du corps cylindrique.

Des ailettes de refroidissement 38 sont disposées parallèlement les unes aux autres le long d'une deuxième rangée alignées le long du deuxième bord 36.

Un vecteur normal à la face concave des ailettes de refroidissement 38 de la deuxième rangée est dirigé dans un sens opposé au sens de rotation du rotor R. Ainsi, l'évacuation de l'air est accélérée.

Le plan médian PM des ailettes de refroidissement 38 de la première et de la deuxième rangée est orienté selon un angle θ compris entre 40 degrés et 60 degrés par rapport au plan transversal PR. De préférence, l'angle θ est sensiblement égal à 45 degrés.

De préférence, le rotor 2 comporte en outre d'autres ailettes de refroidissement disposées parallèlement les unes aux autres et alignées selon une ou plusieurs autres rangées agencées entre les ailettes de refroidissement de la première rangée et les ailettes de refroidissement de la deuxième rangée.

De préférence, l'extrémité distale 12 des bras de fixation s'étend en saillie perpendiculairement à une surface périphérique 30 du corps cylindrique de manière former une ailette de refroidissement propre à diriger l'air vers la surface périphérique du corps cylindrique.

De préférence, le rotor 2 comporte en outre une couronne 40 coaxiale au corps cylindrique. La couronne 40 forme avec les ailettes de refroidissement des canaux de refroidissement 41.

Dans le mode de réalisation préféré illustré sur les figures, la couronne 40 coiffe uniquement les ailettes de refroidissement disposées sur une partie centrale de la surface périphérique 30.

Les ailettes de refroidissement 38 agencées sur le premier bord 34 et sur le deuxième bord 36 de la surface périphérique sont ouvertes sur l'extérieur. Autrement dit, une partie des ailettes de refroidissement 38 agencées sur le premier bord 34 et le deuxième bord 36 de la surface périphérique n'est pas couverte par la couronne 40.

La couronne 40 est délimitée par un bord latéral 44 adjacente à l'extrémité 42 de la surface périphérique. De préférence, le bord latéral 44 de la couronne est éloigné de l'extrémité 42 de la surface périphérique d'une distance D comprise entre 15 millimètres et 30 millimètres, cette distance D étant mesurée uniquement selon la direction axiale A.

De préférence, l'extrémité distale 12 des bras de fixation est également raccordée à une face latérale 46 de la couronne. Ainsi, comme visible sur la figure 2, l'extrémité distale 12 des faces principales des bras de fixation présentent une largeur LA supérieure à la hauteur des canaux de ventilation 41. La deuxième face latérale 20 de l'extrémité distale 21 des bras de fixation affleure la face extérieure 41 de la couronne. La première face latérale 18 de l'extrémité distale des bras de fixation affleure la surface intérieure 32 du corps cylindrique.

En référence à la figure 5, l'invention concerne également un ensemble 48 ralentisseur électromagnétique et génératrice. Cet ensemble comporte un rotor 2 et un stator 50. Le rotor 2 est conformé selon les caractéristiques mentionnées ci-dessus.

Le stator 50 comprend une face externe 52 et une face interne 54. La face externe 52 porte un inducteur de ralentisseur 56 agencé en regard d'une surface intérieure 32 du corps cylindrique. La face interne 54 porte un induit de génératrice 58. Le corps cylindrique 6 du rotor 2 forme un induit de ralentisseur. La bague intérieure de fixation 4 comprend un inducteur de génératrice 60 disposé en regard de la face interne 54 du stator.

## Revendications

1. Rotor (2) de machine électrique tournante, le rotor étant propre à tourner autour d'un axe de rotation (X-X) dans un sens de rotation (R) par rapport au stator, l'axe de rotation (X-X) s'étendant selon une direction axiale (A); le rotor comportant :

   - une bague intérieure de fixation (4) destinée à être fixée à un arbre rotatif,
   - un corps cylindrique (6) ayant une surface périphérique (30), le corps cylindrique et la bague intérieure de fixation étant coaxiaux,
   - des bras de fixation (8) raccordées à la bague intérieure de fixation et au corps cylindrique en une zone de raccordement ; pour chaque bras de fixation, un plan tangentiel (PT1, PT2), une droite (D1, D2) et un plan transversal (PR) étant définis ; le plan tangentiel (PT1, PT2) étant tangentiel à la surface périphérique en la zone de raccordement (27) du bras de fixation ; le plan transversal (PR) étant perpendiculaire à l'axe de rotation (X-X) et passant par la zone de raccordement (27) du bras de fixation ; la droite (D1, D2) étant contenue dans le plan tangentiel (PT1, PT2) et le plan transversal (PR) ;
   les bras de fixation (8) présentant une forme de lamelle ayant une première face principale (16) située d'un côté amont du rotor en considérant le sens de rotation (R), une deuxième face principale (14) opposée à la première face principale, une première face latérale (18) destinée à être en regard d'un stator, une deuxième face latérale (20) opposée à la première face latérale, une première arête (15) agencée entre la deuxième face principale (14) et la deuxième face latérale (20) ; les bras de fixation (8) comprenant une portion distale (21) raccordée au corps cylindrique ; chaque bras de fixation (8) étant incliné de sorte que la première arête (15) de l'extrémité distale du bras de fixation forme un angle d'inclinaison (β2) compris entre 40 degrés et 60 degrés, et de préférence 45 degrés, avec la droite (D1, D2).

**2.** Rotor (2) selon la revendication 1, dans lequel les bras de fixation (8) comportent, lorsque vu dans le plan transversal (PR) un premier tronçon (22) courbe, un deuxième tronçon (24) courbe et un troisième tronçon (26) rectiligne ; le premier tronçon, le deuxième tronçon courbe et le troisième tronçon étant situé entre la bague intérieure de fixation (4) et le corps cylindrique (6), et dans lequel la portion distale (21) inclinée comprend au moins le troisième tronçon (24).

**3.** Rotor (2) selon l'une quelconque des revendications 1 et 2, dans lequel le premier tronçon (22) est raccordé à la bague intérieure de fixation (4), et dans lequel le premier tronçon (22) présente un premier rayon de courbure (R1), le deuxième tronçon (24) présente un deuxième rayon de courbure (R2), et le rapport entre le premier rayon de courbure et le deuxième rayon de courbure est compris entre 1,5 et 2, 5.

**4.** Rotor (2) selon l'une quelconque des revendications 1 à 3, dans lequel la portion distale (21) des bras de fixation est inclinée par rapport à un axe d'inclinaison (Y-Y) s'étendant selon une direction longitudinale de la portion distale du bras de fixation, l'axe d'inclinaison (Y-Y) étant situé au centre de la deuxième face latérale (20).

**5.** Rotor (2) selon l'une quelconque des revendications 1 à 4, dans lequel le troisième tronçon (26) s'étend sur une longueur comprise entre 30 millimètres et 60 millimètres avant son raccordement au corps cylindrique (6).

**6.** Rotor (2) selon l'une quelconque des revendications 1 à 5, dans lequel l'extrémité distale (12) des bras de fixation, lorsque vue dans le plan transversal (PR), est décalée angulairement vers l'arrière d'un angle (α) compris entre 50 degrés et 60 degrés par rapport à l'extrémité proximale (10), en considérant le sens de rotation (R) du rotor par rapport à un stator.

**7.** Rotor (2) selon l'une quelconque des revendications 1 à 6, qui comporte en outre des ailettes de refroidissement (38) fixées à la surface périphérique (30) du corps cylindrique et une couronne (40) coaxiale au corps cylindrique (6), la couronne coiffant uniquement les ailettes de refroidissement (38) agencées sur une partie centrale de la surface périphérique (30), les ailettes de refroidissement (38) agencées sur un premier bord (34) et sur un deuxième bord (36) de la surface périphérique étant ouvertes sur l'extérieur.

**8.** Rotor (2) selon la revendication 7, dans lequel la surface périphérique (30) est délimitée selon la direction axiale (A) par une extrémité (42), la couronne (40) comprenant un bord latéral (44) adjacent à l'extrémité (42) de la surface périphérique, et dans lequel le bord latéral (44) de la couronne est éloignée de l'extrémité (42) de la surface périphérique d'une distance (D) comprise entre 15 millimètres et 30 millimètres, ladite distance (D) étant mesurée selon la direction axiale (A).

**9.** Rotor (2) selon l'une quelconque des revendications 7 et 8, dans lequel l'extrémité distale (12) des bras de fixation est raccordée à une face latérale (28) de raccordement du corps cylindrique, à la surface périphérique (30) du corps cylindrique et à une face latérale (46) de la couronne ; l'extrémité distale (12) des bras de fixation s'étendant en saillie perpendiculairement à la surface périphérique (30) du corps cylindrique de manière former une ailette de refroidissement propre à diriger l'air vers la surface périphérique du corps cylindrique.

**10.** Ensemble (48) ralentisseur électromagnétique et génératrice, ledit ensemble comportant un stator (50) et un rotor (2) ; le stator (50) comprenant une face externe (52) et une face interne (54) ; la face externe (52) portant un inducteur de ralentisseur (56) agencé en regard d'une surface intérieure (32) du corps cylindrique ; la face interne (54) portant un induit de génératrice (58) ; le rotor étant conformé selon l'une quelconque des revendications 1 à 9, le corps cylindrique (6) formant un induit de ralentisseur, la bague intérieure de fixation (4) comprenant un inducteur de génératrice (60) disposé en regard de la face interne (54) du stator.

FIG. 1

FIG. 2

FIG. 3

FIG. 4

FIG. 5

Europäisches
Patentamt

European
Patent Office

Office européen
des brevets

**RAPPORT DE RECHERCHE EUROPEENNE**

Numéro de la demande

EP 24 22 3033

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | FR 3 011 991 A1 (WINACELLES [FR]) 17 avril 2015 (2015-04-17) | 1 | INV. H02K1/30 |
| Y | * page 11, lignes 19-21; figure 4 * | 7 | H02K9/06 |
| A | | 2-6,8-10 | H02K49/04 |
| A | FR 3 105 635 A1 (VALEO SYSTEMES THERMIQUES [FR]) 25 juin 2021 (2021-06-25) * figure 9 * | 1-10 | |
| A | FR 2 995 047 A1 (TELMA [FR]) 7 mars 2014 (2014-03-07) * abrégé; figure 9 * | 1-10 | |
| Y | CN 211 239 493 U (TELMA AUTOMOBILE BRAKING SYSTEM SHANGHAI CO LTD) 11 août 2020 (2020-08-11) | 7 | |
| A | * abrégé; figure 7 * | 1 | |
| A | AT 508 877 A2 (SEIWALD ANDREAS [AT]) 15 avril 2011 (2011-04-15) * abrégé; figure 7 * | 1-10 | |

DOMAINES TECHNIQUES
RECHERCHES (IPC)

H02K

Le présent rapport a été établi pour toutes les revendications

| Lieu de la recherche | Date d'achèvement de la recherche | Examinateur |
|---|---|---|
| La Haye | 10 juin 2025 | Espinós Iglesias, E |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
& : membre de la même famille, document correspondant

EPO FORM 1503 03.82 (P04C02)

## ANNEXE AU RAPPORT DE RECHERCHE EUROPEENNE
## RELATIF A LA DEMANDE DE BREVET EUROPEEN NO.

EP 24 22 3033

La présente annexe indique les membres de la famille de brevets relatifs aux documents  brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

10-06-2025

| Document brevet cité au rapport de recherche | Date de publication | Membre(s) de la famille de brevet(s) | Date de publication |
|---|---|---|---|
| FR 3011991 A1 | 17-04-2015 | AUCUN | |
| FR 3105635 A1 | 25-06-2021 | CN 114830495 A | 29-07-2022 |
| | | EP 4078773 A1 | 26-10-2022 |
| | | FR 3105635 A1 | 25-06-2021 |
| | | US 2023023583 A1 | 26-01-2023 |
| | | WO 2021123548 A1 | 24-06-2021 |
| FR 2995047 A1 | 07-03-2014 | BR 112015004723 A2 | 04-07-2017 |
| | | EP 2893622 A1 | 15-07-2015 |
| | | ES 2715323 T3 | 03-06-2019 |
| | | FR 2995047 A1 | 07-03-2014 |
| | | MX 346855 B | 03-04-2017 |
| | | TR 201904048 T4 | 21-05-2019 |
| | | US 2015236578 A1 | 20-08-2015 |
| | | WO 2014033420 A1 | 06-03-2014 |
| CN 211239493 U | 11-08-2020 | AUCUN | |
| AT 508877 A2 | 15-04-2011 | AUCUN | |

EPO FORM P0460

Pour tout renseignement concernant cette annexe : voir Journal Officiel de l'Office européen des brevets, No.12/82

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 1855848